# EUROPÄISCHE PATENTSCHRIFT

(11) **EP 3 390 149 B1**
(45) Veröffentlichungstag und Bekanntmachung des Hinweises auf die Patenterteilung: **12.02.2020**
(21) Anmeldenummer: 16812935.1
(22) Anmeldetag: 14.12.2016
(51) Int. Cl.: B60P 1/64

(54) **TRANSPORTFAHRZEUG FÜR CONTAINER**
TRANSPORT VEHICLE FOR CONTAINERS
VÉHICULE DE TRANSPORT POUR CONTENEURS

(30) Priorität: 15.12.2015 DE 102015121804
(43) Veröffentlichungstag der Anmeldung: 24.10.2018
(73) Patentinhaber: Konecranes Global Corporation, 05830 Hyvinkää (FI)
(72) Erfinder: HEGEWALD, Mike, 40597 Düsseldorf (DE); MOUTSOKAPAS, Jannis, 40789 Monheim (DE)
(74) Vertreter: Moser Götze & Partner Patentanwälte mbB
(86) Internationale Anmeldenummer: PCT/EP2016/081035
(87) Internationale Veröffentlichungsnummer: WO 2017/102862

(56) Entgegenhaltungen:
- DE-A1-102007 039 778
- GB-A- 1 464 383
- US-A1- 2001 038 777

## Beschreibung

Die Erfindung betrifft ein Transportfahrzeug für Container, mit einer ersten Abstellfläche, auf der ein Container abstellbar ist, und mit zwei sich gegenüberliegenden Führungsflächen, die in Richtung der ersten Abstellfläche aufeinander zu gerichtet verlaufen, um einen Container beim Abstellen auf dem Transportfahrtzeug in Richtung der ersten Abstellfläche zu führen, wobei die erste Abstellfläche zwischen den Führungsflächen angeordnet ist.

Typisches Einsatzgebiet derartiger Transportfahrzeuge sind Umschlaganlagen für Container und hierbei insbesondere der Transport von Containern innerhalb von Container-Terminals in See- oder Binnenhäfen sowie in Container-Terminals für den kombinierten Verkehr zwischen Straße und Schiene.

Als Container werden in diesem Zusammenhang ISO-Container im Sinne genormter Großraum- beziehungsweise Seefrachtbehälter mit genormten Aufnahmepunkten oder Eckbeschlägen für Lastaufnahmemittel verstanden, die im internationalen Warenverkehr zum Einsatz kommen. Am weitesten verbreitet sind ISO-Container mit einer Standard-Breite von 8 Fuß beziehungsweise 2438 mm und einer Länge von 20, 40 oder 45 Fuß.

Darüber hinaus sollen auch als Pallet-Wide- oder Wide-Body-Container bezeichnete Container umfasst sein, die eine Breite von mehr als 2438 mm, insbesondere von etwa 2500 bis 2550 mm, ansonsten aber die genannten Längen und genormten Eckbeschläge von ISO-Containern aufweisen.

Ein entsprechendes Transportfahrzeug ist für eine Zuladung von mindestens 20 t ausgelegt und dementsprechend als Schwerlast-Transportfahrzeug ausgebildet. Die genannten Container können in beladenem Zustand bis zu 45 t wiegen. Auch ein Transportfahrzeug, das leer fährt oder einen leeren Container transportiert, soll unter dieses Verständnis fallen, soweit dieses Fahrzeug eine Zuladung von mindestens 20 t transportieren kann.

Derartige Transportfahrzeuge weisen üblicherweise Räder mit Pneus, beispielsweise mit Luft befüllte Gummireifen, auf und sind hierüber flurgebunden, aber nicht schienengebunden und somit frei verfahrbar. Dementsprechend sind die vorliegend betroffenen Transportfahrzeuge von Schienenfahrzeugen und insbesondere von Eisenbahnwagons zu unterscheiden. Die Transportfahrzeuge können darüber hinaus manuell über einen in einer Fahrerkabine mitfahrenden Fahrer, halb-automatisch oder bei so genannten Automated Guided Vehicles (AGV), die keine Fahrerkabine aufweisen müssen, vollautomatisch und somit fahrerlos betrieben werden. Der Antrieb dieser Transportfahrzeuge erfolgt üblicherweise dieselelektrisch, dieselhydraulisch oder vollelektrisch, insbesondere batterieelektrisch.

Transportfahrzeuge, welche einer der vorbeschriebenen Arten entsprechen, sind beispielsweise aus den deutschen Offenlegungsschriften DE 10 2007 039 778 A1 und DE 10 2009 025 051 A1 bekannt.

Bei den bekannten Transportfahrzeugen sind insbesondere die von so genannten Einweisern gebildeten Führungsflächen auf einen Transport von ISO-Containern mit einer Standard-Breite eingerichtet. Hierbei weisen die Führungsflächen einen minimalen und insbesondere unveränderlichen Abstand zueinander auf, der etwas größer als die Standard-Breite von 2438mm, aber geringer als die Breite eines Wide-Body-Containers ist. Daher können insbesondere Wide-Body-Container nicht stabil auf einer im Bereich des minimalen Abstands zwischen den Führungsflächen angeordneten Abstellfläche abgestellt werden. Dies wäre jedoch für einen sicheren Transport erforderlich, da die Container bei derartigen Transportfahrzeugen mit ihren Eckbeschlägen in der Regel nicht über Twistlocks arretiert werden. Ein sicheres und stabiles Abstellen auf den weit genug beabstandeten und üblicherweise schräg verlaufenden Bereichen der Führungsflächen ist nicht möglich, da hier ein Abrutschen auf den schrägen Führungsflächen und eine instabile Schrägstellung des Containers drohen. Daher werden entsprechende Wide-Body-Container bisher nicht mit den vorgenannten Transportfahrzeugen transportiert und insbesondere nicht automatisiert auf entsprechende Transportfahrzeuge verladen, sondern von manuell betriebenen Transportfahrzeugen wie beispielsweise Reach Stackern gehandabt und transportiert.

Hiervon ausgehend ist es die Aufgabe der vorliegenden Erfindung, ein verbessertes Transportfahrzeug für Container bereit zu stellen, das eine besonders einfache Anpassung für einen sicheren und stabilen Transport von unterschiedlich ausgebildeten Containern auch in automatisierten Container-Terminals ermöglicht.

Diese Aufgabe wird durch ein Transportfahrzeug mit den Merkmalen des Anspruchs 1 gelöst. In den Ansprüchen 2 bis 8 sind vorteilhafte Ausgestaltungen der Erfindung und in Anspruch 9 eine vorteilhafte Verwendung der Erfindung angegeben.

Ein Transportfahrzeug für Container, mit einer ersten Abstellfläche, auf der ein Container abstellbar ist, und mit zwei sich gegenüberliegenden Führungsflächen, die in Richtung der ersten Abstellfläche aufeinander zu gerichtet verlaufen, um einen Container beim Abstellen auf dem Transportfahrtzeug in Richtung der ersten Abstellfläche zu führen, wobei die erste Abstellfläche zwischen den Führungsflächen angeordnet ist, wird dadurch verbessert, dass ein Adapter vorgesehen ist, der zwischen einer Bereitschaftsposition und einer Betriebsposition derart bewegbar ist, dass ein Container beim Abstellen auf dem Transportfahrzeug auf die erste Abstellfläche geführt wird, wenn der Adapter in der Bereitschaftsposition ist, und auf eine von dem Adapter gebildete und zwischen den Führungsflächen angeordnete zweite Abstellfläche geführt wird, wenn der Adapter in der Betriebsposition auf das Transportfahrzeug aufgesetzt ist und der Adapter in der Betriebsposition auf eine Stützfläche des Transportfahrzeugs aufgesetzt ist, die in der Bereitschaftsposition wieder freigegeben ist.

Auf diese Weise können bestehende Transportfahrzeuge bei Bedarf durch eine temporäre Bereitstellung des Adapters und eine damit einhergehende temporäre Ausbildung einer zweiten Abstellfläche zwischen den Führungsflächen besonders einfach und flexibel angepasst werden, um unterschiedlich ausgebildete Container sicher aufnehmen und transportieren zu können, ohne dass hierfür die Anordnung der Führungsflächen verändert beziehungsweise die Breite der ersten Führungsfläche vergrößert werden muss. Durch das Aufsetzen des Adapters in seiner Betriebsposition wird die hierdurch bereitgestellte zweite Abstellfläche in einer Absenkrichtung eines abzustellenden Containers gesehen der ersten Abstellfläche wirkungsmäßig derart vorgelagert, dass die erste Abstellfläche deaktiviert beziehungsweise unwirksam ist und von der Unterseite, insbesondere den unteren Eckbeschlägen, des abzustellenden Containers nicht mehr erreicht wird, um auf der ersten Abstellfläche abgestellt zu werden. Ein Container wird damit beim Absenken anstatt auf der ersten Abstellfläche zwangsläufig auf der zweiten Abstellfläche abgestellt und hierbei gegebenenfalls durch zumindest eine der beiden Führungsflächen entsprechend geführt und ausgerichtet. Wenn der Adapter in der Bereitschaftsposition ist, ist die erste Abstellfläche hingegen aktiviert und wirksam, so dass ein Container beim Absenken zwangsläufig auf der ersten Abstellfläche abgestellt und hierbei gegebenenfalls durch zumindest eine der beiden Führungsflächen entsprechend geführt und ausgerichtet wird. Die zweite Abstellfläche ist in der Bereitschaftsposition dementsprechend deaktiviert und unwirksam. Ein derart ausgebildetes Transportfahrzeug ermöglicht einen sicheren und stabilen Transport von unterschiedlich ausgebildeten Containern insbesondere auch dann, wenn das Transportfahrzeug vollautomatisch geführt und dementsprechend als fahrerloses Transportfahrzeug im Sinne eines AGV ausgebildet und betrieben ist. Der Adapter kann hierbei also manuell zwischen der Bereitschaftsposition und der Betriebsposition bewegt werden. In diesem Fall ist keine dauerhafte Verbindung oder Führung des Adapters am Transportfahrzeug erforderlich.

In vorteilhafter Weise ist vorgesehen, dass der Adapter an dem Transportfahrzeug zwischen der Bereitschaftsposition und der Betriebsposition beweglich gelagert ist. In diesem Fall ist der Adapter also über eine geeignete Lagerung mit dem Transportfahrzeug verbunden. Dadurch kann der Adapter beispielsweise mittels Verschieben und/oder Verschwenken auf einfache Weise so bewegt und hierbei geführt werden, dass die zweite Abstellfläche aktiviert und die erste Abstellfläche deaktiviert wird und umgekehrt.

In vorteilhafter Weise ist vorgesehen, dass der Adapter eine ebene Oberseite aufweist, die sich in der Betriebsposition des Adapters in einer horizontalen Ebene erstreckt, um die zweite Abstellfläche auszubilden. Hierfür ist der Adapter in konstruktiv einfacher Weise vorzugsweise plattenförmig oder rahmenförmig ausgebildet und aus einem Stahlwerkstoff hergestellt.

In vorteilhafter Weise ist vorgesehen, dass die erste Abstellfläche und die zweite Abstellfläche so zueinander angeordnet sind, dass ein auf der ersten Abstellfläche abgestellter Container mit seiner Unterseite, insbesondere mit seinen unteren Eckbeschlägen, zwischen den Führungsflächen in einer vorzugsweise horizontalen ersten Ebene positioniert ist und ein auf der zweiten Abstellfläche abgestellter Container mit seiner Unterseite, insbesondere mit seinen unteren Eckbeschlägen, zwischen den Führungsflächen in einer vorzugsweise horizontalen zweiten Ebene positioniert ist, die zweite Ebene oberhalb der ersten Ebene angeordnet ist und in der zweiten Ebene die Führungsflächen mit einem größeren Abstand voneinander beabstandet sind als in der ersten Ebene. Hierdurch können unterschiedlich breite Container, insbesondere Wide-Body-Container, die auf der ersten Abstellfläche nicht stabil mit horizontal ausgerichteter Unterseite zwischen den Führungsflächen abgestellt werden können, auf der zweiten Abstellfläche in horizontaler Ausrichtung stabil und somit sicher zwischen den Führungsflächen auf der temporär eingerichteten zweiten Abstellfläche abgestellt werden. Wenn anschließend wieder ein Container mit Standard-Breite transportiert werden soll, kann der Adapter auf einfache Weise wieder in die Bereitschaftsposition bewegt werden. Dadurch wird die zweite Abstellfläche entfernt beziehungsweise deaktiviert und die erste Abstellfläche ist wieder aktiviert und wirksam. Dies ist vorteilhaft, da für Container mit der im Vergleich zu Wide-Body-Containern schmaleren Standard-Breite eine bessere Ausrichtung und Positionierung durch die geringere minimale Beabstandung der Führungsflächen im Bereich der unteren ersten Ebene bewirkt wird.

Gemäß der Erfindung ist vorgesehen, dass der Adapter in der Betriebsposition auf eine Stützfläche des Transportfahrzeugs aufgesetzt ist, die in der Bereitschaftsposition wieder freigegeben ist. Der Adapter kann dadurch als einfaches passives und insbesondere selbsttragendes Element ausgebildet sein, das in seiner vertikalen Lage zwischen den Führungsflächen allein durch das flächige Aufsetzen beziehungsweise Abstellen mit seiner Unterseite der vorzugsweise stationären und in Bezug auf die Führungsflächen ortsfesten Stützfläche gehalten wird, ohne dass für das Halten in der vertikalen Lage ein aktiver Halteantrieb erforderlich ist. Der Adapter muss lediglich in sich eine geeignete Dimensionierung und Tragfähigkeit aufweisen, um auch unter der Einwirkung eines Containers die zweite Abstellfläche formstabil zu erhalten.

In konstruktiv einfacher Weise ist vorgesehen, dass die Stützfläche auf der ersten Abstellfläche ausgebildet ist. Der Adapter ist somit in der Betriebsposition auf die erste Abstellfläche aufgesetzt und gibt diese in seiner Bereitschaftsposition frei. Dadurch kann die zweite Abstellfläche besonders einfach aktiviert und der ersten Abstellfläche vorgelagert werden, um die erste Abstellfläche zu deaktivieren.

In einer alternativen Ausführungsform kann vorgesehen sein, dass die Stützfläche außerhalb, insbesondere neben und/oder unter, der ersten Abstellfläche ausgebildet ist. Dies kann vorteilhaft sein, wenn der Adapter in seiner Bereitschaftsposition so angeordnet ist, dass er von dort ausgehend in seiner Betriebsposition nicht auf der ersten Abstellfläche aufgesetzt werden kann. Zudem wird die erste Abstellfläche durch den abgesetzten Adapter nicht belastet und beeinträchtigt.

In konstruktiv einfacher Weise ist außerdem vorgesehen, dass der Adapter über eine Positioniervorrichtung mit einem Positionierantrieb zwischen der Bereitschaftsposition und der Betriebsposition bewegbar ist, wobei der Positionierantrieb vorzugsweise als Linearantrieb ausgebildet ist und insbesondere einen Hubzylinder, vorzugsweise Elektrozylinder oder Hydraulikzylinder, oder einen Riementrieb, Kettentrieb oder Ritzel-Zahnstangentrieb umfasst.

In konstruktiv einfacher Weise ist zudem vorgesehen, dass der Adapter an einem Positionierarm der Positioniervorrichtung angeordnet ist und der Positionierarm an dem Transportfahrzeug bewegbar, insbesondere schwenkbar, gelagert und mit dem Positionierantrieb antriebsmäßig verbunden ist, um den Adapter zwischen der Bereitschaftsposition und der Betriebsposition zu bewegen.

Eine besonders vorteilhafte Verwendung eines wie zuvor beschrieben ausgebildeten Transportfahrzeugs ergibt sich im Hinblick auf die Aufnahme und den Transport eines als Wide-Body-Container ausgebildeten Containers.

Ein Ausführungsbeispiel der Erfindung wird anhand der nachfolgenden Beschreibung näher erläutert. Es zeigen:
Figur 1 eine perspektivische Ansicht eines als Hub-AGV ausgebildeten Transportfahrzeugs,
Figur 2a eine schematische Schnittansicht einer Vorderseite des Transportfahrzeugs gemäß Figur 1,
Figur 2b eine schematische Schnittansicht eines Ausschnitts einer Längsseite des Transportfahrzeugs gemäß Figur 1 mit einem Adapter in einer Bereitschaftsposition,
Figur 3a die Schnittansicht gemäß Figur 2a mit zwei Adaptern in ihrer Betriebsposition und
Figur 3b die Schnittansicht gemäß Figur 2b mit einem Adapter in seiner Betriebsposition.

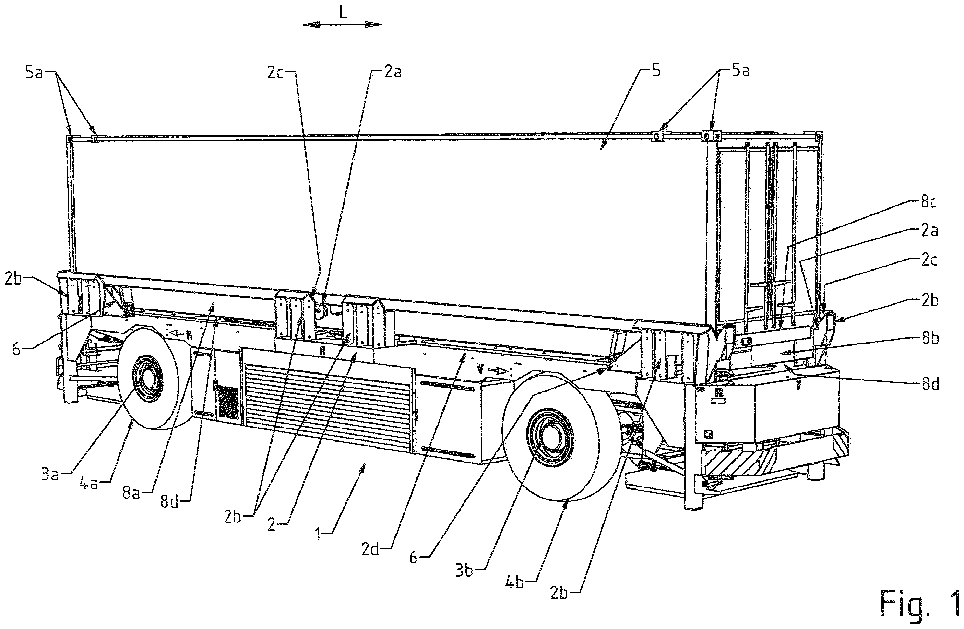

Die Figur 1 zeigt eine perspektivische Ansicht eines flurgebundenen Transportfahrzeugs 1 für Container 5, insbesondere ISO-Container und Wide-Body-Container, das nach Art eines AGV vollautomatisch fahrerlos betreibbar und insbesondere ohne Fahrerkabine ausgebildet ist. Das Transportfahrzeug 1 kann jedoch auch manuell oder halb-automatisch betrieben sein und hierfür eine Fahrerkabine aufweisen. Das als Vierradfahrzeug ausgebildete Transportfahrzeug 1 umfasst einen Fahrzeugrahmen 2, an dem auf einer gemeinsamen Vorderachse 3a zwei vordere Räder 4a und auf einer gemeinsamen Hinterachse 3b zwei hintere Räder 4b gelagert sind. Die vier Räder 4a, 4b sind mit einer Bereifung versehen, die vorzugsweise eine mit Luft befüllte Gummibereifung im Sinne von Pneus ist. Über die Räder 4a ist das flurgebundene Transportfahrzeug 1 frei und dementsprechend nicht schienengebunden verfahrbar.

Außerdem umfasst das Transportfahrzeug 1 einen Fahrantrieb, der im Wesentlichen aus einem vorderen Elektromotor, einem vorderen Verteilgetriebe, einem hinteren Elektromotor und einem hinteren Verteilgetriebe besteht. Der vordere Elektromotor ist in Längsrichtung L des Transportfahrzeuges 1 gesehen zentral und im Bereich der Vorderachse 3a unter dem Fahrzeugrahmen 2 befestigt. Der hintere Elektromotor ist in Längsrichtung L des Transportfahrzeuges 1 gesehen zentral und im Bereich der Hinterachse 3b unter dem Fahrzeugrahmen 2 befestigt. Der vordere Elektromotor treibt über das vordere Verteilgetriebe die beiden vorderen Räder 4a an und der hintere Elektromotor über das hintere Verteilgetriebe die beiden hinteren Räder 4b. Das Transportfahrzeug 1 hat somit einen Allradantrieb. Der Fahrantrieb kann dieselelektrisch oder vollelektrisch mit einer Batterie, insbesondere einer Bleibatterie, ausgebildet sein.

Das Transportfahrzeug 1 weist an einer Oberseite 2d seines Fahrzeugrahmens 2 eine sich in einer horizontalen Ebene erstreckende erste Abstellfläche 2a auf, auf der ein 45 Fuß langer und als ISO-Container ausgebildeter Container 5 abgestellt ist. Bei Containern dieser Länge sind jeweils an den in Längsrichtung L gegenüberliegenden Enden auf einer 45 Fuß-Position und zusätzlich auch von jedem Ende ausgehend um 2,5 Fuß zur Containermitte versetzt auf einer 40 Fuß-Position entsprechende Eckbeschläge 5a vorgesehen. Die erste Abstellfläche 2a erstreckt sich folglich in Längsrichtung L zwischen den beiden 45 Fuß-Positionen. Dadurch können auf der ersten Abstellfläche 2a auch ein 40 Fuß langer oder in Längsrichtung L gesehen hintereinander zwei 20 Fuß lange und als ISO-Container ausgebildete Container 5, insbesondere über ihre unteren Eckbeschläge 5a, abgestellt werden. Die Eckbeschläge 5a eines in Längsrichtung L zentriert abgestellten 40 Fuß langen Containers 5 sind auf der 40 Fuß-Position angeordnet. 20 Fuß lange Container 5 sind mit ihren Eckbeschlägen 5a, die den in Längsrichtung L gegenüberliegenden Enden des Transportfahrzeugs 1 zugewandt sind, auf der 45 Fuß-Position angeordnet. Die in der Längserstreckung L gesehen der Fahrzeugmitte zugewandten Eckbeschläge 5a sind dementsprechend auf einer 20 Fuß-Position der ersten Abstellfläche 2a angeordnet.

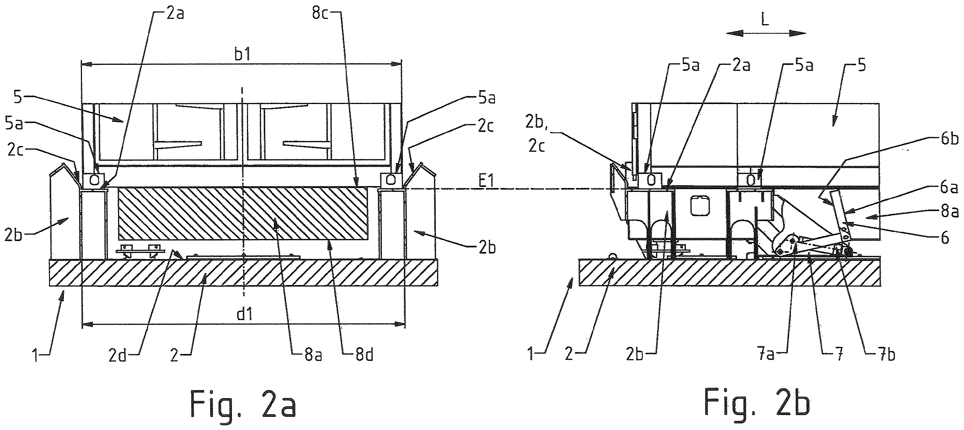

Auf dem Fahrzeugrahmen 2 des Transportfahrzeugs 1 sind außerdem zwei sich gegenüberliegende Führungsflächen 2c vorgesehen, zwischen denen die erste Abstellfläche 2a angeordnet ist. Hierbei ist die erste Abstellfläche 2a in Bezug auf die Führungsflächen 2c ortsfest angeordnet. Die vorzugsweise ebenen Führungsflächen 2c erstrecken sich jeweils in Längsrichtung L zwischen den beiden äußeren 45 Fuß-Positionen. Auch verlaufen die Führungsflächen 2c in Richtung der ersten Abstellfläche 2a trichterartig aufeinander zu gerichtet, enden jedoch mit einem minimalen Abstand d1 (siehe Figur 2a) zueinander. Mit anderen Worten sind die Führungsflächen 2c an ihrem der ersten Abstellfläche 2a zugewandten unteren Ende mit dem minimalen Abstand d1 voneinander beabstandet und weisen hiervon ausgehend einen von der ersten Abstellfläche 2a nach oben und voneinander weggerichteten Verlauf auf, durch welchen die Führungsflächen 2c einen nach oben zunehmenden Abstand zueinander aufweisen. Der minimale Abstand d1 entspricht damit einer maximalen Breite der ersten Abstellfläche 2a rechtwinklig zur Längsrichtung L. Durch diese Ausgestaltung der Führungsflächen 2c kann ein Container 5 beziehungsweise dessen untere Eckbeschläge 5a beim zum Abstellen auf dem Transportfahrzeug 1 erfolgenden Absenken von den Führungsflächen 2c in Richtung der ersten Abstellfläche 2a geführt und zu der ersten Abstellfläche 2a entsprechend seitlich ausgerichtet werden. Außerdem dienen die Führungsflächen 2c zur Sicherung gegen ein Verrutschen von auf dem Transportfahrzeug 1 abgestellten Containern 5. Dies gilt für sämtliche der zuvor genannten Containerlängen.

In Figur 1 ist zu erkennen, dass sich die erste Abstellfläche 2a und jede Führungsfläche 2c aus mehreren getrennten und voneinander beabstandeten Teilflächen zusammensetzt, die jeweils von einem auch als Einweiser bezeichneten Führungselement 2b gebildet werden. Hierfür ist im Bereich der Ecken zweier in Längsrichtung L gesehen hintereinander angeordneter gedachter Rechtecke jeweils ein Führungselement 2b auf dem Fahrzeugrahmen 2 angeordnet. Damit sind an jedem der beiden sich in Längsrichtung L gegenüberliegenden Enden des Transportfahrzeugs 1 zwei äußere Führungselemente 2b angeordnet, die die 45 Fuß-Positionen und die 40 Fuß-Positionen abdecken und sich dementsprechend hierzwischen mit ihren Teilflächen der ersten Abstellfläche 2a und der zugehörigen Führungsfläche 2c erstrecken. Zwischen den äußeren Führungselementen 2b sind im Bereich der Fahrzeugmitte zwei weitere Paare von inneren Führungselementen 2b angeordnet, die mit ihren Teilflächen jeweils eine der 20 Fuß-Positionen abdecken. Die jeweils einer Längsseite zugeordneten inneren Führungselemente 2b können auch zu einem einzigen inneren Führungselement 2b zusammengefasst sein, von dem die beiden 20 Fuß-Positionen abgedeckt werden.

Der Figur 1 ist außerdem zu entnehmen, dass auf dem Fahrzeugrahmen 2 in Längsrichtung L des Transportfahrzeugs 1 gesehen hintereinander eine erste Hubplattform 8a und eine zweite Hubplattform 8b angeordnet sind. Das Transportfahrzeug 1 ist daher als so genanntes Hub-AGV ausgebildet.

Die Hubplattformen 8a, 8b sind insbesondere zwischen den Führungsflächen 2c angeordnet, wobei sich zwischen jeder Hubplattform 8a, 8b und jeder Führungsfläche 2c eine Teilfläche der ersten Abstellfläche 2a erstreckt (siehe Figur 2a). Ausgehend von der jeweiligen Führungsfläche 2c erstreckt sich jede Teilfläche der ersten Abstellfläche 2a vorzugsweise in etwa so weit in Richtung der Hubplattform 8a, 8b, dass auf der Teilfläche ein Eckbeschlag 5a vollständig flächig aufliegen kann. Die Hubplattformen 8a, 8b sind quaderförmig ausgebildet und können über ihren jeweiligen Hubantrieb unabhängig voneinander oder synchron relativ zu den Führungsflächen 2c und zwischen diesen und den sich hieran anschließenden Teilflächen der ersten Abstellfläche 2a angehoben und abgesenkt werden. Mittels der Hubplattformen 8a, 8b können Container 5 also auf der ersten Abstellfläche 2a abgestellt und hiervon ausgehend angehoben werden.

Hierbei ist insbesondere ein Heben und Senken zwischen einer angehobenen Hubstellung, in der eine Unterseite 8d der Hubplattform 8a, 8b von der Oberseite 2d des Fahrzeugrahmens 2 beabstandet ist, und einer Transportstellung möglich. In der Hubstellung tragen die Hubplattformen 8a, 8b die auf ihrer Oberseite 8c stehenden Container 5. Für ein Abstellen von Containern 5 auf der ersten Abstellfläche 2a werden die Hubplattformen 8a, 8b in die Transportstellung abgesenkt. In der Figur 1 sind beide Hubplattformen 8a und 8b gemeinsam in der abgesenkten Transportstellung dargestellt. In der Transportstellung ist die Unterseite 8d jeweils auf der Oberseite 2d abgesetzt, wodurch der zwischen Fahrzeugrahmen 2 und der entsprechenden Hubplattform 8a, 8b angeordnete Hubantrieb jeweils in Bezug auf einen Kraftfluss zwischen der zugehörigen Hubplattform 8a, 8b und dem Fahrzeugrahmen 2 überbrückt wird. Alternativ oder zusätzlich zum Absetzen auf dem Fahrzeugrahmen 2 kann zudem in der Transportstellung die Oberseite 8c der Hubplattformen 8a, 8b von der Unterseite des abgestellten Containers 5 beabstandet sein und mit dieser somit nicht in Kontakt stehen. Dadurch wird erreicht, dass die Hubantriebe und auch die Hubplattformen 8a, 8b nicht durch abgestellte Container 5 belastet werden, da sämtliche von abgestellten Containern 5 aufgebrachten Belastungen und der entsprechende Kraftfluss über die erste Abstellfläche 2a in den Fahrzeugrahmen 2 abgetragen beziehungsweise eingeleitet werden. Die Hubplattformen 8a, 8b befinden sich daher beim Transport von Containern 5 in der Transportstellung.

Die Länge jeder einzelnen Hubplattform 8a, 8b ist außerdem jeweils so gewählt, dass auf der Oberseite 8c der entsprechenden Hubplattform 8a, 8b jeweils ein nicht dargestellter 20-Fuß langer Container 5 aufgenommen werden kann. Auch ergänzen sich die erste Hubplattform 8a und die zweite Hubplattform 8b, für den Fall, dass sie synchron angehoben und abgesenkt werden, zu einer großen Hubplattform auf der ein 40-Fuß langer Container 5 oder der in Figur 1 dargestellte ein 45-Fuß lange Container 5 aufgenommen werden kann. Das Transportfahrzeug 1 ist daher im eingangs definierten Sinne als Schwerlast-Transportfahrzeug ausgebildet und für eine entsprechende Zuladung ausgelegt.

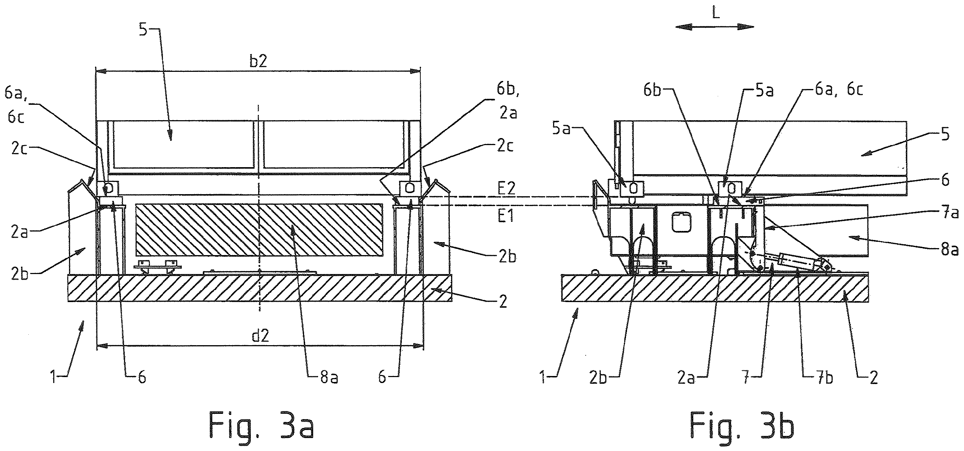

Das Transportfahrzeug 1 weist insgesamt vier plattenförmig ausgebildete Adapter 6 auf, von denen jeweils ein Adapter 6 einem der äußeren Führungselemente 2b zugeordnet ist. In Figur 1 sind dementsprechend zwei Adapter 6 dargestellt, die auf der abgebildeten Längsseite des Transportfahrzeugs 1 angeordnet sind. Jeder Adapter 6 ist in gleicher Weise zwischen einer Bereitschaftsposition und einer Betriebsposition bewegbar. Hierfür sind die Adapter 6 an dem Transportfahrzeug 1 entsprechend beweglich gelagert, beispielsweise jeweils über eine Positioniervorrichtung 7. Insbesondere sind die Adapter 6 synchron und automatisiert zwischen der jeweiligen Bereitschaftsposition und Betriebsposition bewegbar. Wenn die Adapter 6 in der Bereitschaftsposition sind, wird ein Container 5 beim Abstellen auf dem Transportfahrzeug 1 zwangsläufig auf die erste Abstellfläche 2a geführt und auf dieser abgestellt. Diese Situation ist in Figur 1 sowie den unten beschriebenen Figuren 2a und 2b dargestellt. Wenn die Adapter 6 in der Betriebsposition sind, in der die Adapter 6 auf das Transportfahrzeug 1 aufgesetzt sind, wird ein Container 5 beim Abstellen auf dem Transportfahrzeug 1 zwangsläufig auf eine von den Adaptern 6 gebildete und zwischen den Führungsflächen 2c angeordnete zweite Abstellfläche 6a geführt und auf dieser abgestellt. Diese Situation ist in den unten beschriebenen Figuren 3a und 3b dargestellt.

In der Figur 2a ist eine schematische Schnittansicht einer Vorderseite des Transportfahrzeugs 1 gemäß Figur 1 gezeigt. Die der Vorderseite zugewandte erste Hubplattform 8a ist in der auf den Fahrzeugrahmen 2 abgesenkten Transportstellung abgebildet. Gezeigt sind außerdem die beiden der Vorderseite zugewandten äußeren Führungselemente 2b. Die beiden in Figur 1 gezeigten und der Rückseite zugewandten äußeren Führungselemente 2b sind ebenso wie die in Figur 1 gezeigten inneren Führungselemente 2b verdeckt und somit in Figur 2a nicht dargestellt.

Der in Figur 2a dargestellte und auf der ersten Abstellfläche 2a abgestellte Container 5 weist eine Breite b1 von 2438 mm auf, die der Standard-Breite von ISO-Containern entspricht und die im Bereich des minimalen Abstands d1 zwischen den Führungsflächen 2c aufgenommen werden kann. Der Container 5 ist hierbei mit seinen unteren Eckbeschlägen 5a auf der ersten Abstellfläche 2a und insbesondere auf deren Teilflächen abgestellt, die von den äußeren Führungselementen 2b gebildet werden. Die auch als Corner-Castings bezeichneten und an der Unterseite des Containers 5 angeordneten unteren Eckbeschläge 5a sind hierdurch in einer horizontalen ersten Ebene E1 positioniert, die sich parallel zu der horizontalen ersten Abstellfläche 2a erstreckt und insbesondere von dieser gebildet wird. Auch die Unterseite des Containers 5 ist horizontal und parallel zu der ersten Ebene E1 ausgerichtet.

Die Figur 2b zeigt eine schematische Schnittansicht eines Ausschnitts einer sich in Längsrichtung L erstreckenden Längsseite des Transportfahrzeugs 1 gemäß Figur 1 mit einem Adapter 6 in der Bereitschaftsposition. Der Ausschnitt zeigt das der Vorderseite aus Figur 2a zugewandte Ende des Transportfahrzeugs 1 mit einem der beiden diesem Ende zugeordneten äußeren Führungselemente 2b. Die nicht dargestellte gegenüberliegende Längsseite ist identisch ausgebildet. Auch sind in gleicher Weise an dem der Vorderseite gegenüberliegenden rückseitigen Ende des Transportfahrzeugs 1 zwei entsprechende Führungselemente 2b und zwei Adapter 6 in der Bereitschaftsposition angeordnet und hieraus über entsprechende Positioniervorrichtungen 7 in die Betriebsposition bewegbar. Aus Symmetriegründen gelten für alle nicht dargestellten Adapter 6 und Positioniervorrichtungen 7 die Ausführungen zu den in den Figuren 1, 2b und 3a und 3b abgebildeten Adaptern 6 und Positioniervorrichtungen 7 entsprechend.

In Figur 2b ist auch eine Positioniervorrichtung 7 für den Adapter 6 mit einem als Schwenkarm ausgebildeten und an der Längsseite des Fahrzeugrahmens 2 drehbar gelagerten Positionierarm 7a dargestellt. Hierbei ist der Positionierarm 7a um eine rechtwinklig zur Längsrichtung L angeordnete Drehachse drehbar. An einem oberen Ende des Positionierarms 7a ist der plattenförmige Adapter 6 im Wesentlichen rechtwinklig zum Positionierarm 7a angeordnet und an einem gegenüberliegenden unteren Ende greift ein Positionierantrieb 7b in Form eines vorzugsweise als Elektrozylinder oder Hydraulikzylinder ausgebildeten Hubzylinders an, um den Adapter 6 zwischen der Bereitschaftsposition und der Betriebsposition (siehe Figur 3b) vorzugsweise in Längsrichtung L und in Richtung des Fahrzeugrahmens 2 zu bewegen. Als Positionierantrieb 7b können auch andere Linearantriebe verwendet werden wie beispielsweise ein Riementrieb, Kettentrieb oder Ritzel-Zahnstangentrieb.

Ein Wide-Body-Container mit einer Breite b2, die etwa 2500 bis 2550 mm beträgt und somit breiter als der minimale Abstand d1 ist, kann nicht stabil mit einer horizontalen Ausrichtung seiner Unterseite beziehungsweise seiner Eckbeschläge 5a auf der ersten Abstellfläche 2a abgestellt werden, da ein Abrutschen entlang der Führungsflächen 2a und damit eine zu vermeidende Schräglage des Containers 5 droht (siehe Figur 3a). Für ein sicheres und stabiles Abstellen eines als Wide-Body-Containers ausgebildeten Containers 5 sind die an dem Transportfahrzeug 1 vorgesehenen Adapter 6 in die Betriebsposition zu bewegen. Dadurch wird die erste Abstellfläche 2a deaktiviert beziehungsweise unwirksam und die zweite Abstellfläche 2b aktiviert beziehungsweise wirksam.

In der Figur 3a ist die Seitenansicht gemäß Figur 2a mit zwei Adaptern 6 in der Betriebsposition abgebildet. In gleicher Weise sind an einer nicht dargestellten Rückseite des Transportfahrzeugs 1 zwei Adapter 6 vorgesehen, die ebenfalls in der Betriebsposition sind. In der Betriebsposition ist jeder Adapter 6 mit seiner Unterseite 6b auf die erste Abstellfläche 2a, die somit als Stützfläche des Transportfahrzeugs 1 dient, aufgesetzt. Die Stützfläche ist von dem Adapter 6 in der Bereitschaftsposition wieder freigegeben (siehe Figuren 2a und 2b). Von den ebenen Oberseiten 6c der Adapter 6, die sich in der Betriebsposition der Adapter 6 in einer gemeinsamen horizontalen Ebene und vorzugsweise parallel zu ihrer Unterseite 6b erstrecken, wird so die zweite Abstellfläche 6a ausgebildet, die der deaktivierten ersten Abstellfläche 2a vorgelagert ist. Die zweite Abstellfläche 6a ist somit ebenso wie erste Abstellfläche 2a aus Teilflächen zusammengesetzt, die von den jeweiligen Adaptern 6 gebildet sind. Die Adapter 6 und insbesondere die hiervon gebildeten Teilflächen der zweiten Abstellfläche 6a sind hierfür jeweils so dimensioniert, dass sie sich in der Betriebsposition vollständig auf der Teilfläche der zugehörigen ersten Abstellfläche 2a aufsetzen lassen, ohne darüber hinaus in Richtung der Hubplattform 8a, 8b in deren Bewegungsbereich hinein zu ragen.

Auf der nun wirksamen zweiten Abstellfläche 6a ist ein als Wide-Body-Container ausgebildeter Container 5 abgestellt. Die Hubplattformen 8a, 8b wurden hierfür analog zu Figur 2a in die Transportstellung abgesenkt. Erkennbar ist, dass der auf der zweiten Abstellfläche 6a abgestellte Container 5 mit seiner Unterseite, insbesondere mit seinen unteren Eckbeschlägen 5a, zwischen den Führungselementen 2b in einer horizontalen zweiten Ebene E2 positioniert ist. Die zweite Ebene E2 ist oberhalb der ersten Ebene E1 angeordnet. Durch eine entsprechende Dimensionierung der Dicke beziehungsweise Höhe der identisch ausgebildeten Adapter 6 ist die zweite Ebene E2 in einem so hohen Bereich zwischen den Führungsflächen 2c angeordnet, in dem die Führungsflächen 2c nicht mehr mit dem minimalen Abstand d1 parallel zueinander verlaufen, sondern mit einem größeren Abstand d2 voneinander beabstandet sind als in der ersten Ebene E1. Dadurch kann auf der von den Adaptern 6 gebildeten zweiten Abstellfläche 6a ein Wide-Body-Container mit einer sicheren und stabilen horizontalen Ausrichtung abgestellt werden, ohne dass ein Abrutschen seiner unteren Eckbeschläge 5a auf den schrägen Führungsflächen 2c droht.

Die Figur 3b zeigt die Seitenansicht gemäß Figur 2b mit einem der beiden Adapter 6 in der Betriebsposition. Hierbei ist durch Betätigung des Positionierantriebs 7b der Positionierarm 7a so verschwenkt, dass der Adapter 6 auf der als Stützfläche dienenden ersten Abstellfläche 2a aufgesetzt ist. Die beiden Abstellflächen 2a, 6a erstrecken sich hierbei in zueinander parallelen horizontalen Ebenen. Im Wesentlichen rechtwinklig hierzu erstreckt sich der Positionierarm 7a.

Wenn auf dem Transportfahrzeug 1 wieder ein Container 5 mit der Standard-Breite b1 abgestellt werden soll, können die Adapter 6 in ihre Bereitschaftsposition zurück bewegt werden, um die zweite Abstellfläche 6a zu deaktivieren. Der Container 5 wird dann zwangsläufig auf die dadurch wieder wirksam gewordene erste Abstellfläche 2a geführt und kann hierauf geführt und sicher abgestellt werden.

Durch die in den Figuren gezeigte und oben beschriebene Anordnung der Adapter 6 und insbesondere der zugehörigen Positioniervorrichtungen 7 entlang der beiden Längsseiten des Transportfahrzeugs 1 und insbesondere oberhalb von dessen Fahrzeugrahmen 2 ist eine besonders einfache Nachrüstung von Transportfahrzeugen 1 möglich, insbesondere um diese für einen automatisierten Transport von Wide-Body-Containern zu verwenden. Auch wird die Hub- und Senkbewegung der Hubplattformen 8a, 8b in vorteilhafter Weise nicht behindert, da die Adapter 6 sowohl in der Bereitschaftsposition als auch in der Betriebsposition außerhalb des sich zwischen den Adaptern 6 erstreckenden Bewegungsbereichs der Hubplattformen 8a, 8b angeordnet sind. Dadurch können auch mit entsprechenden Adaptern 6 ausgestattete Hub-AGVs Container 5 an eine passive Übergabestation abgeben oder hiervon aufnehmen, wie es beispielsweise in der DE 10 2007 039 778 A1 beschrieben ist.

Vorzugsweise werden bei den zuvor beschriebenen Transportfahrzeugen 1 je abzustellendem Container 5 vier plattenförmige Adapter 6 vorgesehen, von denen jeder in der Betriebsposition im Bereich einer Führungsfläche 2c und an diese angrenzend so positioniert und abgesetzt ist, dass ein unterer Eckbeschlag 5a auf den entsprechenden Adapter 6 beziehungsweise die hiervon gebildete Teilfläche der zweiten Abstellfläche 6a geführt und hierauf abgestellt werden kann. Wenn zwei 20 Fuß lange Container 5 in Längsrichtung L hintereinander auf dem Transportfahrzeug 1 abgestellt werden sollen, sind daher vorzugsweise acht Adapter 6 vorgesehen, damit von jedem Container 5 vier Eckbeschläge 5a auf entsprechenden Abstellflächen 6a abgestellt werden können. So wie an jeder Längsseite nur ein inneres Führungselement 2b vorgesehen sein kann, kann für die 20 Fuß-Positionen auch an jeder Längsseite nur ein entsprechend lang dimensionierter Adapter 6 angeordnet werden, so dass insgesamt sechs Adapter 6 mit entsprechenden Positioniervorrichtungen 7 ausreichen können.

Im vorliegenden Ausführungsbeispiel sind nur an den 40 Fuß-Positionen Adapter 6 mit Positioniervorrichtungen 7 angeordnet. Es können jedoch zusätzlich auch an jeder 20 Fuß-Position und an jeder 45 Fuß-Position entsprechende Adapter 6, insgesamt also zwölf Adapter 6, vorgesehen werden. Dadurch kann für jede Containerlänge für jeden unteren Eckbeschlag 5a an jeder der oben genannten Positionen ein Adapter 6 bereitgestellt werden, auf den sich die Eckbeschläge 5a abstützen können, wenn die Adapter 6 in der Betriebsposition auf die jeweilige Stützfläche aufgesetzt sind.

Grundsätzlich ist es allerdings auch möglich, dass nur ein plattenförmiger oder rahmenförmiger Adapter 6 vorgesehen ist, der in der Betriebsposition auf das Transportfahrzeug 1 aufgesetzt ist, beispielsweise auf der Oberseite 8c der Hubplattformen 8a, 8b, wenn diese in der Transportstellung auf dem Fahrzeugrahmen 2 abgesetzt sind. Hierbei ist die Stützfläche, über die der Adapter 6 in der Betriebsposition auf das Transportfahrzeug 1 aufgesetzt ist und sich abstützt, außerhalb der ersten Abstellfläche 2a ausgebildet, nämlich durch die Oberseite 8c der auf dem Fahrzeugrahmen 2 abgesetzten Hubplattformen 8a, 8b unterhalb und daneben. Um den Adapter 6 wieder in die Bereitschaftsposition zu bewegen, kann der Adapter 6 von der Oberseite 8c weg bewegt werden, so dass die von der Oberseite 8c gebildete Stützfläche wieder freigegeben ist.

Alternativ ist ein weiteres Ausführungsbeispiel denkbar, das sich von dem in den vorgenannten Figuren dargestellten Ausführungsbeispiel im Wesentlichen dadurch unterscheidet, dass das Transportfahrzeug 1 nicht als Hub-AGV ausgebildet ist und dementsprechend keine Hubplattformen 8a, 8b aufweist. Das Abstellen von Containern 5 auf den Abstellflächen 2a, 6a kann dann nicht durch das Transportfahrzeug 1 selbst erfolgen.

### Bezugszeichenliste

- 1: Transportfahrzeug
- 2: Fahrzeugrahmen
- 2a: erste Abstellfläche
- 2b: Führungselement
- 2c: Führungsfläche
- 2d: Oberseite
- 3a: Vorderachse
- 3b: Hinterachse
- 4a: vordere Räder
- 4b: hintere Räder
- 5: Container
- 5a: Eckbeschlag
- 6: Adapter
- 6a: zweite Abstellfläche
- 6b: Unterseite
- 6c: Oberseite
- 7: Positioniervorrichtung
- 7a: Positionierarm
- 7b: Positionierantrieb
- 8a: erste Hubplattform
- 8b: zweite Hubplattform
- 8c: Oberseite
- 8d: Unterseite

- b1: Breite
- b2: Breite
- d1: Abstand
- d2: Abstand
- E1: erste Ebene
- E2: zweite Ebene
- L: Längsrichtung

## Patentansprüche

1. Transportfahrzeug (1) für Container (5), mit einer ersten Abstellfläche (2a), auf der ein Container (5) abstellbar ist, und mit zwei sich gegenüberliegenden Führungsflächen (2c), die in Richtung der ersten Abstellfläche (2a) aufeinander zu gerichtet verlaufen, um einen Container (5) beim Abstellen auf dem Transportfahrtzeug (1) in Richtung der ersten Abstellfläche (2a) zu führen, wobei die erste Abstellfläche (2a) zwischen den Führungsflächen (2c) angeordnet ist, **dadurch gekennzeichnet, dass** ein Adapter (6) vorgesehen ist, der zwischen einer Bereitschaftsposition und einer Betriebsposition derart bewegbar ist, dass ein Container (5) beim Abstellen auf dem Transportfahrzeug (1) auf die erste Abstellfläche (2a) geführt wird, wenn der Adapter (6) in der Bereitschaftsposition ist, und auf eine von dem Adapter (6) gebildete und zwischen den Führungsflächen (2c) angeordnete zweite Abstellfläche (6a) geführt wird, wenn der Adapter (6) in der Betriebsposition auf das Transportfahrzeug (1) aufgesetzt ist, und der Adapter (6) in der Betriebsposition auf eine Stützfläche des Transportfahrzeugs (1) aufgesetzt ist, die in der Bereitschaftsposition wieder freigegeben ist.

2. Transportfahrzeug (1) nach Anspruch 1, **dadurch gekennzeichnet, dass** der Adapter (6) an dem Transportfahrzeug (1) zwischen der Bereitschaftsposition und der Betriebsposition beweglich gelagert ist.

3. Transportfahrzeug (1) nach Anspruch 1 oder 2, **dadurch gekennzeichnet, dass** der Adapter (6) eine ebene Oberseite (6c) aufweist, die sich in der Betriebsposition des Adapters (6) in einer horizontalen Ebene erstreckt, um die zweite Abstellfläche (6a) auszubilden.

4. Transportfahrzeug (1) nach einem der Ansprüche 1 bis 3, **dadurch gekennzeichnet, dass** die erste Abstellfläche (2a) und die zweite Abstellfläche (6a) so zueinander angeordnet sind, dass ein auf der ersten Abstellfläche (2a) abgestellter Container (5) mit seiner Unterseite, insbesondere mit seinen unteren Eckbeschlägen (5a), zwischen den Führungsflächen (2c) in einer vorzugsweise horizontalen ersten Ebene (E1) positioniert ist und ein auf der zweiten Abstellfläche (6a) abgestellter Container (5) mit seiner Unterseite, insbesondere mit seinen unteren Eckbeschlägen (5a), zwischen den Führungsflächen (2c) in einer vorzugsweise horizontalen zweiten Ebene (E2) positioniert ist, die zweite Ebene (E2) oberhalb der ersten Ebene (E1) angeordnet ist und in der zweiten Ebene (E2) die Führungsflächen (2c) mit einem größeren Abstand (d2) voneinander beabstandet sind als in der ersten Ebene (E1).

5. Transportfahrzeug (1) nach einem der Ansprüche 1 bis 4, **dadurch gekennzeichnet, dass** die Stützfläche auf der ersten Abstellfläche (2a) ausgebildet ist.

6. Transportfahrzeug (1) nach einem der Ansprüche 1 bis 5, **dadurch gekennzeichnet, dass** die Stützfläche außerhalb, insbesondere neben und/oder unter, der ersten Abstellfläche (2a) ausgebildet ist.

7. Transportfahrzeug (1) nach einem der Ansprüche 1 bis 6, **dadurch gekennzeichnet, dass** der Adapter (6) über eine Positioniervorrichtung (7) mit einem Positionierantrieb (7b) zwischen der Bereitschaftsposition und der Betriebsposition bewegbar ist, wobei der Positionierantrieb (7b) vorzugsweise als Linearantrieb ausgebildet ist und insbesondere einen Hubzylinder, vorzugsweise Elektrozylinder oder Hydraulikzylinder, oder einen Riementrieb, Kettentrieb oder Ritzel-Zahnstangentrieb umfasst.

8. Transportfahrzeug (1) nach Anspruch 7, **dadurch gekennzeichnet, dass** der Adapter (6) an einem Positionierarm (7a) der Positioniervorrichtung (7) angeordnet ist und der Positionierarm (7a) an dem Transportfahrzeug (1) bewegbar, insbesondere schwenkbar, gelagert und mit dem Positionierantrieb (7b) antriebsmäßig verbunden ist, um den Adapter (6) zwischen der Bereitschaftsposition und der Betriebsposition zu bewegen.

9. Verwendung eines Transportfahrzeugs (1) nach einem der Ansprüche 1 bis 8 zum Transport eines als Wide-Body-Container ausgebildeten Containers (5).

## Claims

1. Transport vehicle (1) for containers (5), having a first set-down surface (2a) on which a container (5) can be set down, and having two mutually opposing guide surfaces (2c) which extend towards one another in the direction of the first set-down surface (2a) in order to guide a container (5) during set-down on the transport vehicle (1) in the direction of the first set-down surface (2a), wherein the first set-down surface (2a) is disposed between the guide surfaces (2c), **characterised in that** an adapter (6) is provided which can be moved between a standby position and an operating position in such a way that a container (5) is guided onto the first set-down surface (2a) during set-down on the transport vehicle (1) when the adapter (6) is in the standby position, and is guided onto a second set-down surface (6a), which is formed by the adapter (6) and disposed between the guide surfaces (2c), when the adapter (6) is placed onto the transport vehicle (1) in the operating position and the adapter (6) is placed, in the operating position, on a support surface of the transport vehicle (1) which is cleared in the standby position.

2. Transport vehicle (1) as claimed in claim 1, **characterised in that** the adapter (6) is movably mounted on the transport vehicle (1) between the standby position and the operating position.

3. Transport vehicle (1) as claimed in claim 1 or 2, **characterised in that** the adapter (6) has a planar upper side (6c) which extends in a horizontal plane when the adapter (6) is in the operating position, in order to form the second set-down surface (6a).

4. Transport vehicle (1) as claimed in any one of claims 1 to 3, **characterised in that** the first set-down surface (2a) and the second set-down surface (6a) are disposed with respect to one another such that a container (5) set down on the first set-down surface (2a) is positioned with its lower side, in particular with its lower corner fittings (5a), between the guide surfaces (2c) in a preferably horizontal first plane (E1) and a container (5) set down on the second set-down surface (6a) is positioned with its lower side, in particular with its lower corner fittings (5a), between the guide surfaces (2c) in a preferably horizontal second plane (E2), the second plane (E2) is disposed above the first plane (E1), and in the second plane (E2), the guide surfaces (2c) are spaced apart at a greater distance (d2) from each other than in the first plane (E1).

5. Transport vehicle (1) as claimed in any one of claims 1 to 4, **characterised in that in that** the support surface is formed on the first set-down surface (2a).

6. Transport vehicle (1) as claimed in any one of claims 1 to 5, **characterised in that** the support surface is formed outside, in particular next to and/or below, the first set-down surface (2a).

7. Transport vehicle (1) as claimed in any one of claims 1 to 6, **characterised in that** the adapter (6) can be moved by means of a positioning device (7) with a positioning drive (7b) between the standby position and the operating position, wherein the positioning drive (7b) is preferably designed as a linear drive and in particular includes a lifting cylinder, preferably an electric cylinder or hydraulic cylinder, or a belt drive, chain drive or rack-and-pinion drive.

8. Transport vehicle (1) as claimed in claim 7, **characterised in that** the adapter (6) is disposed on a positioning arm (7a) of the positioning device (7) and the positioning arm (7a) is mounted on the transport vehicle (1) in a movable, in particular pivotable, manner and is drivingly connected to the positioning drive (7b) in order to move the adapter (6) between the standby position and the operating position.

9. Use of a transport vehicle (1) as claimed in any one of claims 1 to 8 for transportation of a container (5) designed as a wide-body container.

## Revendications

1. Véhicule de transport (1) destiné à des conteneurs (5), le véhicule de transport comportant une première surface de placement (2a) sur laquelle un conteneur (5) peut être placée, et deux surfaces de guidage opposées (2c) qui s'étendent en étant dirigée l'une vers l'autre dans la direction de la première surface de placement (2a) pour guider un conteneur (5) en direction de la première surface de placement (2a) lors du placement sur le véhicule de transport (1), la première surface de placement (2a) étant disposée entre les surfaces de guidage (2c),
**caractérisé en ce qu'**un adaptateur (6) est prévu et peut être déplacé entre une position d'attente et une position d'utilisation de manière à guider un conteneur (5), lors du placement sur le véhicule de transport (1), jusque sur la première surface de placement (2a) lorsque l'adaptateur (6) est dans la position d'attente, et jusque sur la deuxième surface de placement (6a), formée par l'adaptateur (6) et disposée entre les surfaces de guidage (2c), lorsque l'adaptateur (6) est placé sur le véhicule de transport (1) dans la position d'utilisation et l'adaptateur (6) est placé dans la position d'utilisation sur une surface de support du véhicule de transport (1) qui est à nouveau libérée dans la position d'attente.

2. Véhicule de transport (1) selon la revendication 1, **caractérisé en ce que** l'adaptateur (6) est monté sur le véhicule de transport (1) de façon mobile entre la position d'attente et la position d'utilisation.

3. Véhicule de transport (1) selon la revendication 1 ou 2, **caractérisé en ce que** l'adaptateur (6) comporte un côté supérieur plan (6c) qui s'étend dans un plan horizontal, lorsque l'adaptateur (6) est dans la position de travail, pour former la deuxième surface de placement (6a).

4. Véhicule de transport (1) selon l'une des revendications 1 à 3, **caractérisé en ce que** la première surface de placement (2a) et la deuxième surface de placement (6a) sont disposées l'une par rapport à l'autre de telle sorte qu'un conteneur (5), placé sur la première surface de placement (2a), soit positionné dans un premier plan (E1) de préférence horizontal de manière à ce que sa face inférieure, en particulier ses cornières inférieures (5a), soit située entre les surfaces de guidage (2c) et qu'un conteneur (5), placé sur la deuxième surface de placement (6a), soit positionné dans un deuxième plan (E2) de préférence horizontal de manière à que sa face inférieure, en particulier ses cornières inférieures (5a), soit située entre les surfaces de guidage (2c), le deuxième plan (E2) étant disposé au-dessus du premier plan (E1) et les surfaces de guidage (2c) étant espacées l'une de l'autre d'une plus grande distance (d2) dans le deuxième plan (E2) que dans le premier plan (E1).

5. Véhicule de transport (1) selon l'une des revendications 1 à 4, **caractérisé en ce que** la surface de support est formée sur la première surface de placement (2a).

6. Véhicule de transport (1) selon l'une des revendications 1 à 5, **caractérisé en ce que** la surface de support est formée à l'extérieur, en particulier à côté et/ou au-dessous, de la première surface de placement (2a).

7. Véhicule de transport (1) selon l'une des revendications 1 à 6, **caractérisé en ce que** l'adaptateur (6) peut être déplacé entre la position d'attente et la position d'utilisation par le biais d'un dispositif de positionnement (7) muni d'un entraînement de positionnement (7b),l'entraînement de positionnement (7b) étant de préférence conçu comme un entraînement linéaire et comporte en particulier un vérin de levage, de préférence un vérin électrique ou un vérin hydraulique, ou un entraînement par courroie, un entraînement par chaîne ou un pignon.

8. Véhicule de transport (1) selon la revendication 7, **caractérisé en ce que** l'adaptateur (6) est disposé sur un bras de positionnement (7a) du dispositif de positionnement (7) et le bras de positionnement (7a) est monté sur le véhicule de transport (1) de manière mobile, notamment pivotante, et est relié en entraînement à l'entraînement de positionnement (7b) pour déplacer l'adaptateur (6) entre la position d'attente et la position d'utilisation.

9. Utilisation d'un véhicule de transport (1) selon l'une des revendications 1 à 8 pour transporter un conteneur (5) conçu comme un conteneur à caisse large.
